# EUROPEAN PATENT SPECIFICATION

(11) **EP 4 201 644 B1**
(45) Date of publication and mention of the grant of the patent: **01.01.2025**
(21) Application number: 22213713.5
(22) Date of filing: 15.12.2022
(51) Int. Cl.: B29C 53/82, B29D 23/00

(54) **METHOD FOR PRODUCING A HOLLOW COMPONENT MADE OF A COMPOSITE MATERIAL**
VERFAHREN ZUR HERSTELLUNG EINER HOHLEN KOMPONENTE AUS EINEM VERBUNDWERKSTOFF
PROCÉDÉ DE FABRICATION D'UNE PIÈCE CREUSE EN MATÉRIAU COMPOSITE

(30) Priority: 20.12.2021 IT 202100031793
(43) Date of publication of application: 28.06.2023
(73) Proprietor: MBDA ITALIA S.p.A., 00131 Roma (IT)
(72) Inventor: BANCALLARI, LUCA, I-00131 ROMA (IT); BARBIERI, UGO, I-00131 ROMA (IT); CHIOCCA, STEFANO, I-00131 ROMA (IT)
(74) Representative: Carangelo, Pierluigi

(56) References cited:
- EP-A1- 0 192 507
- DE-U1- 202016 007 939
- US-A1- 2014 102 578
- US-A1- 2015 013 819

## Description

### FIELD OF THE INVENTION

The present invention relates to the technical field of the production of hollow components and is particularly directed to a production method for producing a hollow component made of a composite material by winding fibers or filaments, for example carbon fibers or filaments, around a winding mandrel. The aforesaid hollow component is for example, but not exclusively, a fuselage, a tank, a booster, a canister of a missile.

### BACKGROUND ART

In order to obtain hollow components made of composite materials, a technique referred to as filament winding is known, according to which filaments of fibers impregnated with a resin are continuously wound around a winding mandrel which generally has a shape and size corresponding to those of the internal surface of the hollow component. The winding mandrel is generally made of a metal material, for example aluminum or steel.

Once the impregnated fibers have been wound around the winding mandrel, the assembly consisting of the winding mandrel and the fibers wound on the latter is heat treated to cure the resin and consolidate the shape of the hollow component. It is then necessary to remove the winding mandrel from the hollow component. In the case of hollow components having relatively complex shapes, producing winding mandrels which are formed by assembling several parts mechanically coupled to one another is known, so that it is possible to disassemble the winding mandrel to remove the winding mandrel from the hollow component. This known technique has the advantage of reusing the winding mandrel so as to use the same winding mandrel to sequentially produce a plurality of hollow components. However, due to defects or wear of the mechanical coupling systems, in some cases it is complex and difficult or even impossible to disassemble the winding mandrel. Moreover, in some cases, the winding mandrel disassembly and removal operations can impart excessive mechanical stresses to the hollow component. This stresses can damage the hollow component which, therefore, needs to be discarded after production. Moreover, in the production methods of the prior art, the prototyping costs, as well as the costs due to possible shape variations during the step of designing the hollow component, are relatively high. US 2014/102578 A1 discloses a method of fabricating a thermoplastic composite tubular structure that provides a mandrel of a soluble, expandable material.

It is a general object of the present invention to provide a method for producing a hollow component which is such as to solve or reduce as much as possible the drawbacks which affect the production methods of the prior art.

The aforesaid object, as well as other objects which will become apparent below, are achieved by a production method for producing a hollow component made of a composite material as defined in appended claim 1. Preferred and advantageous embodiments of the aforesaid production method are defined in the dependent claims. The present invention also relates to a winding mandrel as generally defined in appended claim 10.

The invention will be better understood from the following detailed description of particular embodiments thereof, given by way of example and not by way of limitation, with reference to the accompanying drawings briefly described in the following paragraphs.

### BRIEF DESCRIPTION OF THE DRAWINGS

Figure 1 shows a general flow diagram of an exemplary and non-limiting embodiment of a method for producing a hollow component in composite material.
Figure 2 shows a three-dimensional sectional view of a non-limiting example of a winding mandrel around which filaments have been wound for producing a hollow component.

### DETAILED DESCRIPTION

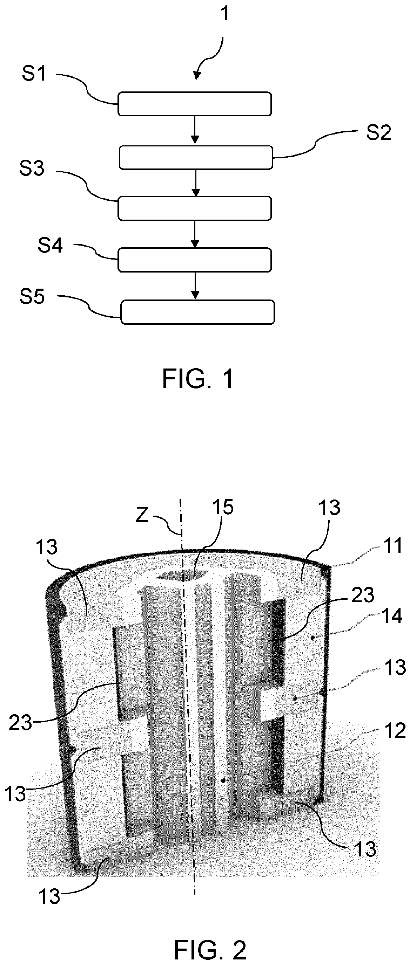

Figure 1 shows an exemplary and non-limiting embodiment of a method 1 for producing a hollow component 11 made of a composite material. In the present description, the aforesaid method 1 will also be referred to as production method 1 more briefly.

The hollow component 11 is, for example, but not exclusively, a component of a missile such as a fuselage, a tank, a booster of a missile, for example. According to an embodiment, the hollow component 11 is a canister of a missile. According to a further embodiment, the aforesaid hollow component is a component of an avionic or aerospace airframe or an automotive component. The aforesaid hollow component 11 can also be a portion of a more complex component which includes one or more further components to be assembled together to form the hollow component.

The hollow component 11 comprises a body, at least part of which is made of a composite material. The composite material is, or comprises, for example, carbon fibers wound and impregnated, or pre-impregnated, with a polymer matrix, for example a resin matrix, preferably an epoxy resin. The carbon fibers are conveniently continuous and wound carbon fibers arranged so as to form a fabric of carbon fibers.

The production method 1 comprises a step S1 of producing or providing a winding mandrel 12, 13, 14, 23 having at least one water-soluble portion 13, 23. According to a particularly advantageous embodiment, the water-soluble portion 13 , 23 of the winding mandrel 12, 13, 14, 23 is made of a water-soluble thermoplastic material. Said water-soluble material consists, for example, of an acrylic resin, for example, consisting of homopolymers, copolymers or methacrylic-styrene-butyl acrylate acid terpolymer. Preferably, said acrylic resin is additivated with a percentage by weight between 3% and 10% of titanium dioxide or triphenyl phosphate.

As shown in Figure 2, the winding mandrel 12, 13, 14, 23 has a mandrel axis Z. Such a mandrel axis Z is an axis about which the winding mandrel 12, 13, 14, 23 is configured to be rotated during winding and/or an axis of a main longitudinal extension of the winding mandrel 12, 13, 14, 23.

The at least one water-soluble portion 13, 23 of the winding mandrel 12, 13, 14, 23 comprises one or more fluid passages. The water-soluble portion 13 has a body made as a three-dimensional mesh or grid in which a fluid, e.g., a liquid, can flow, in particular to dissolve the water-soluble portion 13, 23. According to a preferred embodiment, said one or more fluid passages extend between two end portions, opposite to each other, of the winding mandrel 12, 13, 14, 23 which are axially spaced apart along the axis Z of the winding mandrel 12, 13, 14, 23.

Step S1 of producing or making available the winding mandrel 12, 13, 14, 23 advantageously comprises an operation of producing the aforesaid water-soluble portion 13 by means of three-dimensional printing, or 3D printing. Thereby, it is possible to give the water-soluble portion 13, 23 of the winding mandrel 12, 13, 14, 23 any desired, albeit complex, shape. According to a particularly advantageous embodiment, the aforesaid 3D printing is an FDM (Fused Deposition Modeling) printing.

According to a possible embodiment of the method 1, during the step S1 of realizing the winding mandrel 12, 13, 14, 23 it is possible to produce or provide a winding mandrel 12, 13, 14, 23 which is entirely water soluble. In alternative and advantageous embodiments, however, it is possible to provide that during step S1 of producing the winding mandrel 12, 13, 14, 23, only one or more portions 13, 23 of the winding mandrel 12, 13, 14, 23 are produced from a water-soluble material while one or more remaining portions 12, 14 are produced from a water-insoluble material. Such portions of water-insoluble material 12, 14 are made, for example, of homopolymers, copolymers or terpolymers, such as Acrylonitrile-Butadiene-Styrene (ABS), Polyetherketoneketone (PEKK), Acrylonitrile-Styrene-Acrylate (ASA), Nylon, polyetherimide, polypropylene, carbon fiber reinforced polyamides, polycarbonate, polylactic acid, polyphenylsulfone, or metal or metal alloys, for example. The water-insoluble portions 12, 14 can be produced, for example, through additive techniques, such as 3D printing of polymers, metal or metal alloys, or by means of traditional production processes, such as casting or milling from solid.

In the example in Figure 2, a water-insoluble portion 12 is made integral with one or more water-soluble portions 13, 23 during the same printing process of the water-insoluble portion 12 or by mechanically inserting the water-insoluble portion 12 into the water soluble portion 13, 23 or vice versa. In the particular example shown in Figure 2, a central water-insoluble portion 12 is engaged into at least one water-soluble portion 13, 23, in particular into a plurality of water-soluble portions 13 axially spaced apart from one another along the mandrel axis Z. The water-soluble portions 13 axially spaced apart from one another can be mutually separated or can be joined by a tubular water-soluble portion 23 in which the water-insoluble portion 12 is arranged. Preferably, the axially spaced water-soluble portions 13 are radially protruding portions, for example radially protruding with respect to the central water-insoluble portion 12. In the particular example shown in Figure 2, the winding mandrel particularly comprises, without introducing any limitation, three water-soluble portions 13. In the shown example, each of the water-soluble portions 13 is a plate-like ring.

Moreover, in the particular example shown in Figure 2, one or more water-insoluble portions 14, which are, for example, shells or half-shells, are arranged radially external with respect to the at least one water-soluble portion 13. The external water-insoluble portions 14 can be made integral with the water-soluble portions 13, 23 during the carbon fiber winding process or they can be previously coupled to one another.

The water-insoluble portions 12, 14 are, for example, portions of the winding mandrel 12, 13, 14, 23 intended to be then removed from the hollow component 11 to be conveniently reused in the production method 1 to produce further hollow components 11, or they are water-insoluble portions 14 which are structural or connection elements which are intended to be integrated into the hollow component 11.

For example, with reference to Figure 2, in the example shown, the winding mandrel 12, 13, 14, 23 comprises one or more water-soluble portions 13, for example, three water-soluble crowns 13, and at least one water-insoluble portion 12, 14. The at least one water-insoluble portion 12, 14 comprises, for example, a first water-insoluble portion 12 adapted and configured to be then removed, for example a central core, or a radially inner core, which is removable from the hollow component 11. Alternatively or additionally, the at least one water-insoluble portion 12, 14 comprises, for example, a second portion 14, which is a structural insert, for example, such as an internal reinforcing structural insert, adapted and configured to be integrated into the hollow component 11. In the particular example shown in Figure 2, the second water-insoluble portion 14 is a tubular reinforcing insert. Alternatively or in addition, the at least one water-insoluble portion 12, 14 comprises, for example, a connection portion, for example a joint or a coupling flange, adapted to mechanically couple other hollow components 11, produced according to the production method 1 or in general further components which form part of a complex product which includes the hollow component 11, to the hollow component 11. The water-insoluble connection portion can, for example, allow mechanically coupling the hollow component 11 to one or more further components, for example by means of a mechanical coupling of the direct type, for example by interlocking or screwing, or by means of an indirect mechanical coupling, in which, for example, coupling elements are used, such as screws, pins, rivets, etc., for example.

Moreover, an embodiment in which the winding mandrel 12, 13, 14, 23 comprises, in addition to at least one water-soluble portion 13, at least a first water-insoluble portion 12 and at least a second water-insoluble portion 14, is particularly advantageous. The at least one water-soluble portion 13 acts as a fixing element between the first water-insoluble portion 12 and the second water-insoluble portion 14 making them integral with each other. Once the at least one water-soluble portion 13, 23 has dissolved, the first water-insoluble portion 12 can be extracted from the hollow component 11 since the first water-insoluble portion 12, 23 is no longer fixed to the second water-insoluble portion 14. The second water-insoluble portion 14 is instead intended to be integrated into the hollow component 11, i.e., to remain in the hollow component 11 to form an integral part of the latter.

It is thus apparent that the aforesaid water-soluble portion 13, 23 acting as a fixing element, once the fibers have been wound on the winding mandrel 12, 13, 14, 23 and consolidated, prevents the extraction of the first water-insoluble portion 12 from the hollow component 11 since it structurally connects the first water-insoluble portion 12 to the second water-insoluble portion 14. Once the water-soluble portion 13, 23 has dissolved in water, or in an aqueous solution, the mechanical connection between the first water-insoluble portion 12 and the second water-insoluble portion 14 fails.

The production method 1 further comprises a step S2 of winding filaments or fibers around the winding mandrel 12, 13, 14, 23 produced during step S1. Preferably, the winding step S2 comprises a step of impregnating said filaments or fibers into, or with, a polymer matrix, for example into a resin. Said resin is preferably a thermosetting epoxy resin. According to an embodiment, the winding step S2 is carried out continuously, for example by rotating the winding mandrel 12, 13, 14, 23 about a rotation axis, or winding axis Z, and by drawing the fibers or filaments from one or more feed rolls by dragging. Preferably, during the winding step S2, the winding mandrel 12, 13, 14, 23 is rotated about a rotation axis and during the rotation, the winding mandrel 12, 13, 14, 23 is also simultaneously translated along the rotation axis, alternately in two opposite directions. For example, it is possible to engage a rotating shaft inside the winding mandrel 12, 13, 14, 23, for example in a central hole 15, so as to make the rotating shaft and the winding mandrel 12, 13, 14, 23 rotationally integral with each other. The rotating shaft can be rototranslated, and hence the winding mandrel 12, 13, 14, 23 is thus rototranslated together with the rotating shaft. In the example in Figure 2, the central hole 15 is defined in the central water-insoluble portion 12 of the winding mandrel 12, 13, 14, 23.

The production method 1 further comprises a heat treatment step S3 of the assembly consisting of the winding mandrel 12, 13, 14, 23 and the hollow component 11 to consolidate the shape of the hollow component 11. Said consolidation occurs due to the consolidation of the polymer matrix.

The heat treatment step S3 preferably comprises a first progressive heating sub-step which is linear or instep from an initial temperature to a final temperature, a second intermediate heat treatment sub-step at a constant temperature, for example equal to, or approximately equal to, 120°C, and a third natural cooling sub-step, for example for cooling down to room temperature. For example, the first sub-step has a duration equal to, or approximately equal to, 120 minutes, the second sub-step has a duration equal to, or approximately equal to, 120 minutes, and the third sub-step has a duration equal to, or approximately equal to, 40 minutes. It should be apparent that, in any case, the temperatures and durations of the sub-steps of the heat treatment step S3 essentially depend on the resin used as a matrix of the composite material. Moreover, it should be apparent that, during the heat treatment step S3, the temperatures of such a step must always be lower than the glass transition temperature of the material or materials of which the winding mandrel 12, 13, 14, 23 is made.

The production method 1 further comprises a step S4 of dissolving the at least one water-soluble portion 13, 23 of the winding mandrel 12, 13, 14, 23 by immersing the assembly consisting of the winding mandrel 12, 13, 14, 23 and the hollow component 11 in water or in an aqueous solution. In order speed up the dissolution of the water-soluble portion 13, 23 of the winding mandrel, it is advantageous that, during the dissolution step S4, the water or the aqueous solution has a temperature between 20°C and 50°C and/or that a small amount of sodium carbonate, for example a few grams per liter, is added.

If the winding mandrel 12, 13, 14, 23 has at least a first water-insoluble portion 12 which is not intended to be integrated into the hollow component 11, the production method 1 further comprises a step S5 of extracting said first water-insoluble portion 12 from the hollow component 11.

From the above, it is apparent that a production method 1 for producing a hollow component 11 of the type described above allows fully achieving the preset objects in terms of overcoming the drawbacks of the prior art. In fact, with the aforesaid production method 1 it is possible to produce a hollow component 11, even having relatively complex shapes, in a reliable, economical and rapid manner.

Without prejudice to the principle of the invention, the embodiments and the manufacturing details may be broadly varied with respect to the above description merely disclosed by way of a non-limiting example, without departing from the scope of the invention as defined in the appended claims.

## Claims

1. A method (1) for producing a hollow component (11) made of a composite material, comprising the steps of:
- producing or providing (S1) a winding mandrel (12, 13, 14, 23) having at least one water-soluble portion (13, 23);
- winding (S2) filaments or fibers of the composite material around the winding mandrel (12, 13, 14, 23) to form an assembly comprising the winding mandrel (12, 13, 14, 23) and the hollow component wound around the winding mandrel (12, 13, 14, 23);
- subjecting the assembly consisting of the winding mandrel (12, 13, 14, 23) and the hollow component (11) to a heat treatment (S3) to consolidate the shape of the hollow component (11);
- dissolving (S4) the at least one water-soluble portion (13, 23) of the winding mandrel (12, 13, 14, 23), by immersing the assembly consisting of the winding mandrel (12, 13, 14, 23) and the hollow component (11) in water or in an aqueous solution;
**characterized in that** said at least one water-soluble portion (13, 23) has a body made as a mesh or a three-dimensional grid in which a fluid can flow.

2. A method (1) according to claim 1, wherein during the step (S1) of producing or providing the winding mandrel (12, 13, 14, 23), only one or more portions (13, 23) of the winding mandrel (12, 13, 14, 23) are produced from a water-soluble material while one or more remaining portions (12, 14) are produced from a water-insoluble material.

3. A method (1) according to claim 2, wherein the winding mandrel (12, 13, 14, 23) has at least a first water-insoluble portion (12) which is not intended to be integrated into the hollow component (11), and wherein the method (1) further comprises a step (S5) of extracting said first water-insoluble portion (12) from the hollow component (11).

4. A method (1) according to any one of the preceding claims, wherein the winding mandrel (12, 13, 14, 23) has at least a second water-insoluble portion (14) adapted and configured to be integrated into the hollow component (11) .

5. A method (1) according to claim 4, wherein said second water-insoluble portion (14) comprises a connection portion adapted to mechanically couple to the hollow component (11) at least one further hollow component or at least one further component which forms part of a complex product comprising the hollow component (11).

6. A method (1) according to any one of the preceding claims, wherein:
- the winding mandrel (12, 13, 14, 23) comprises at least a first water-insoluble portion (12) and at least a second water-insoluble portion (14);
- the at least one water-soluble portion (13, 23) acts as a fixing element between the first water-insoluble portion (12) and the second water-insoluble portion (14) making them integral with each other;
- after the step (S4) of dissolving the at least one water-soluble portion (13, 23), the first water-insoluble portion (12) is extractable from the hollow component (11) and the second water-insoluble portion (14) remains integrated into the hollow component (11).

7. A method (1) according to any one of the preceding claims, wherein the step (S1) of producing the winding mandrel (12, 13, 14, 23) comprises an operation of producing said water-soluble portion (13, 23) by 3D printing, preferably FDM (Fused Deposition Modeling) printing.

8. A method (1) according to any one of the preceding claims, wherein said hollow component (11) is a missile or avionic or aerospace or automotive component.

9. A method (1) according to any one of the preceding claims, wherein said winding mandrel has a mandrel axis (Z) and in said water-soluble portion (13, 23) it comprises a plurality of water-soluble portions which are axially spaced from one another.

10. A winding mandrel (12, 13, 14, 23) for producing a hollow component (11) made of a composite material for winding fibers or filaments around the winding mandrel (12, 13, 14, 23), wherein said winding mandrel comprises at least one water-soluble portion (13, 23), **characterized in that** said at least one water-soluble portion (13, 23) has a body made as a mesh or a three-dimensional grid in which a fluid can flow.

11. A winding mandrel (12, 13, 14, 23) according to claim 10, further comprising at least a first water-insoluble portion (12) which is not intended to be integrated into the hollow component (11).

12. A winding mandrel (12, 13, 14, 23) according to claims 10 and 11, wherein the winding mandrel (12, 13, 14, 23) has at least a second water-insoluble portion (14) adapted and configured to be integrated into the hollow component (11).

13. A winding mandrel (12, 13, 14, 23) according to any one of claims 10 to 12, wherein:
- the winding mandrel (12, 13, 14, 23) comprises at least a first water-insoluble portion (12) and at least a second water-insoluble portion (14);
- the at least one water-soluble portion (13, 23) acts as a fixing element between the first water-insoluble portion (12) and the second water-insoluble portion (14) .

14. A winding mandrel (12, 13, 14, 23) according to any one of claims 10 to 12, wherein said water-soluble portion (13, 23) is made of an acrylic resin, preferably additivated with a percentage by weight between 3% and 10% of titanium dioxide or triphenyl phosphate.

## Patentansprüche

1. Verfahren (1) zur Herstellung einer hohlen Komponente (11) aus einem Verbundwerkstoff, umfassend die Schritte:
- Herstellen oder Bereitstellen (S1) eines Wickeldorns (12, 13, 14, 23) mit mindestens einem wasserlöslichen Abschnitt (13, 23);
- Wickeln (S2) von Filamenten oder Fasern des Verbundwerkstoffs um den Wickeldorn (12, 13, 14, 23), um eine Anordnung zu bilden, die den Wickeldorn (12, 13, 14, 23) und die um den Wickeldorn (12, 13, 14, 23) gewickelte hohle Komponente umfasst;
- Unterziehen der Anordnung, die aus Wickeldorn (12, 13, 14, 23) und hohler Komponente (11) besteht, einer Wärmebehandlung (S3) zur Verfestigung der Form der hohlen Komponente (11);
- Auflösen (S4) des mindestens einen wasserlöslichen Abschnitts (13, 23) des Wickeldorns (12, 13, 14, 23), durch Eintauchen der Anordnung, die aus Wickeldorn (12, 13, 14, 23) und hohler Komponente (11) besteht, in Wasser oder in eine wässrige Lösung;
**dadurch gekennzeichnet, dass** der mindestens eine wasserlösliche Abschnitt (13, 23) einen Körper aufweist, der als Netz oder dreidimensionales Gitter ausgebildet ist, in dem ein Fluid fließen kann.

2. Verfahren (1) nach Anspruch 1, wobei während des Schritts (S1) des Herstellens oder Bereitstellens des Wickeldorns (12, 13, 14, 23) lediglich ein oder mehrere Abschnitte (13, 23) des Wickeldorns (12, 13, 14, 23) aus einem wasserlöslichen Material hergestellt werden, während ein oder mehrere verbleibende Abschnitte (12, 14) aus einem wasserunlöslichen Material hergestellt werden.

3. Verfahren (1) nach Anspruch 2, wobei der Wickeldorn (12, 13, 14, 23) mindestens einen ersten wasserunlöslichen Abschnitt (12) aufweist, der nicht in die hohle Komponente (11) integriert werden soll, und wobei das Verfahren (1) ferner einen Schritt (S5) des Extrahierens des ersten wasserunlöslichen Abschnitts (12) aus der hohlen Komponente (11) umfasst.

4. Verfahren (1) nach einem der vorhergehenden Ansprüche, wobei der Wickeldorn (12, 13, 14, 23) mindestens einen zweiten wasserunlöslichen Abschnitt (14) aufweist, der dazu geeignet und ausgebildet ist, in die hohle Komponente (11) integriert zu werden.

5. Verfahren (1) nach Anspruch 4, wobei der zweite wasserunlösliche Abschnitt (14) einen Verbindungsabschnitt umfasst, der dazu geeignet ist, mit der hohlen Komponente (11) mindestens eine weitere hohle Komponente oder mindestens eine weitere Komponente mechanisch zu koppeln, die Teil eines komplexen Produkts bildet, das die hohle Komponente (11) umfasst.

6. Verfahren (1) nach einem der vorstehenden Ansprüche, wobei:
- der Wickeldorn (12, 13, 14, 23) mindestens einen ersten wasserunlöslichen Abschnitt (12) und mindestens einen zweiten wasserunlöslichen Abschnitt (14) umfasst;
- der mindestens eine wasserlösliche Abschnitt (13, 23) als Befestigungselement zwischen dem ersten wasserunlöslichen Abschnitt (12) und dem zweiten wasserunlöslichen Abschnitt (14) fungiert und diese an einem Stück miteinander verbindet;
- nach dem Schritt (S4) des Auflösens des mindestens einen wasserlöslichen Abschnitts (13, 23) der erste wasserunlösliche Abschnitt (12) aus der hohlen Komponente (11) extrahierbar ist und der zweite wasserunlösliche Abschnitt (14) in der hohlen Komponente (11) integriert verbleibt.

7. Verfahren (1) nach einem der vorhergehenden Ansprüche, wobei der Schritt (S1) des Herstellens des Wickeldorns (12, 13, 14, 23) einen Vorgang des Herstellens des wasserlöslichen Abschnitts (13, 23) durch 3D-Druck, vorzugsweise FDM-Druck (Fused Deposition Modeling), umfasst.

8. Verfahren (1) nach einem der vorhergehenden Ansprüche, wobei es sich bei der hohlen Komponente (11) um eine Raketen- oder Avionik- oder Raumfahrt- oder Automobilkomponente handelt.

9. Verfahren (1) nach einem der vorhergehenden Ansprüche, wobei der Wickeldorn eine Dornachse (Z) aufweist und in dem wasserlöslichen Abschnitt (13, 23) eine Vielzahl von wasserlöslichen Abschnitten umfasst, die axial voneinander beabstandet sind.

10. Wickeldorn (12, 13, 14, 23) zum Herstellen einer hohlen Komponente (11) aus einem Verbundwerkstoff zum Wickeln von Fasern oder Filamenten um den Wickeldorn (12, 13, 14, 23), wobei der Wickeldorn mindestens einen wasserlöslichen Abschnitt (13, 23) umfasst, **dadurch gekennzeichnet, dass** der mindestens eine wasserlösliche Abschnitt (13, 23) einen Körper aufweist, der als Netz oder dreidimensionales Gitter ausgebildet ist, in dem ein Fluid fließen kann.

11. Wickeldorn (12, 13, 14, 23) nach Anspruch 10, der ferner mindestens einen ersten wasserunlöslichen Abschnitt (12) umfasst, der nicht in die hohle Komponente (11) integriert werden soll.

12. Wickeldorn (12, 13, 14, 23) nach Anspruch 10 und 11, wobei der Wickeldorn (12, 13, 14, 23) mindestens einen zweiten wasserunlöslichen Abschnitt (14) aufweist, der dazu geeignet und ausgebildet ist, in die hohle Komponente (11) integriert zu werden.

13. Wickeldorn (12, 13, 14, 23) nach einem der Ansprüche 10 bis 12, wobei:
- der Wickeldorn (12, 13, 14, 23) mindestens einen ersten wasserunlöslichen Abschnitt (12) und mindestens einen zweiten wasserunlöslichen Abschnitt (14) umfasst;
- der mindestens eine wasserlösliche Abschnitt (13, 23) als Befestigungselement zwischen dem ersten wasserunlöslichen Abschnitt (12) und dem zweiten wasserunlöslichen Abschnitt (14) fungiert.

14. Wickeldorn (12, 13, 14, 23) nach einem der Ansprüche 10 bis 12, wobei der wasserlösliche Abschnitt (13, 23) aus einem Acrylharz besteht, das vorzugsweise mit einem Gewichtsanteil zwischen 3 % und 10 % Titandioxid oder Triphenylphosphat versetzt ist.

## Revendications

1. Procédé (1) de fabrication d'une pièce creuse (11) en matériau composite, comprenant les étapes consistant à :
- produire ou fournir (S1) un mandrin d'enroulement (12, 13, 14, 23) ayant au moins une partie soluble dans l'eau (13, 23) ;
- enrouler (S2) des filaments ou des fibres du matériau composite autour du mandrin d'enroulement (12, 13, 14, 23) pour former un ensemble comprenant le mandrin d'enroulement (12, 13, 14, 23) et la pièce creuse enroulée autour du mandrin d'enroulement (12, 13, 14, 23) ;
- soumettre l'ensemble constitué du mandrin d'enroulement (12, 13, 14, 23) et de la pièce creuse (11) à un traitement thermique (S3) pour consolider la forme de la pièce creuse (11) ;
- dissoudre (S4) l'au moins une partie hydrosoluble (13, 23) du mandrin d'enroulement (12, 13, 14, 23), en immergeant l'ensemble constitué du mandrin d'enroulement (12, 13, 14, 23) et de la pièce creuse (11) dans de l'eau ou dans une solution aqueuse ;
**caractérisé en ce que** ladite au moins une partie hydrosoluble (13, 23) présente un corps réalisé sous la forme d'un maillage ou d'une grille tridimensionnelle dans laquelle un fluide peut s'écouler.

2. Procédé (1) selon la revendication 1, dans lequel, au cours de l'étape (S1) de production ou de fourniture du mandrin d'enroulement (12, 13, 14, 23), seules une ou plusieurs parties (13, 23) du mandrin d'enroulement (12, 13, 14, 23) sont produites à partir d'un matériau soluble dans l'eau tandis qu'une ou plusieurs parties restantes (12, 14) sont produites à partir d'un matériau insoluble dans l'eau.

3. Procédé (1) selon la revendication 2, dans lequel le mandrin d'enroulement (12, 13, 14, 23) comporte au moins une première partie insoluble dans l'eau (12) qui n'est pas destinée à être intégrée dans la pièce creuse (11), et dans lequel le procédé (1) comprend en outre une étape (S5) d'extraction de ladite première partie insoluble dans l'eau (12) de la pièce creuse (11).

4. Procédé (1) selon l'une quelconque des revendications précédentes, dans lequel le mandrin d'enroulement (12, 13, 14, 23) comporte au moins une seconde partie insoluble dans l'eau (14) adaptée et configurée pour être intégrée dans la pièce creuse (11).

5. Procédé (1) selon la revendication 4, dans lequel ladite seconde partie insoluble dans l'eau (14) comprend une partie de connexion adaptée pour coupler mécaniquement à la pièce creuse (11) au moins une autre pièce creuse ou au moins une autre pièce qui fait partie d'un produit complexe comprenant la pièce creuse (11).

6. Procédé (1) selon l'une quelconque des revendications précédentes, dans lequel :
- le mandrin d'enroulement (12, 13, 14, 23) comprend au moins une première partie insoluble dans l'eau (12) et au moins une seconde partie insoluble dans l'eau (14) ;
- l'au moins une partie hydrosoluble (13, 23) agit comme élément de fixation entre la première partie insoluble dans l'eau (12) et la seconde partie insoluble dans l'eau (14) les rendant solidaires l'une de l'autre ;
- après l'étape (S4) de dissolution de l'au moins une partie hydrosoluble (13, 23), la première partie insoluble dans l'eau (12) est extractible de la pièce creuse (11) et la seconde partie insoluble dans l'eau (14) reste intégrée dans la pièce creuse (11).

7. Procédé (1) selon l'une quelconque des revendications précédentes, dans lequel l'étape (S1) de réalisation du mandrin d'enroulement (12, 13, 14, 23) comprend une opération de réalisation de ladite partie hydrosoluble (13, 23) par impression 3D, de préférence par impression FDM (Fused Deposition Modeling).

8. Procédé (1) selon l'une quelconque des revendications précédentes, dans lequel ladite pièce creuse (11) est une pièce de missile ou avionique ou aérospatiale ou automobile.

9. Procédé (1) selon l'une quelconque des revendications précédentes, dans lequel ledit mandrin d'enroulement possède un axe de mandrin (Z) et dans ladite partie soluble dans l'eau (13, 23), il comprend une pluralité de parties solubles dans l'eau qui sont espacées axialement les unes des autres.

10. Mandrin d'enroulement (12, 13, 14, 23) pour produire une pièce creuse (11) en matériau composite pour enrouler des fibres ou des filaments autour du mandrin d'enroulement (12, 13, 14, 23), ledit mandrin d'enroulement comprenant au moins une partie soluble dans l'eau (13, 23), **caractérisé en ce que** ladite au moins une partie hydrosoluble (13, 23) possède un corps réalisé sous la forme d'un maillage ou d'une grille tridimensionnelle dans laquelle un fluide peut s'écouler.

11. Mandrin d'enroulement (12, 13, 14, 23) selon la revendication 10, comprenant en outre au moins une première partie insoluble dans l'eau (12) qui n'est pas destinée à être intégrée dans la pièce creuse (11).

12. Mandrin d'enroulement (12, 13, 14, 23) selon les revendications 10 et 11, dans lequel le mandrin d'enroulement (12, 13, 14, 23) comporte au moins une seconde partie insoluble dans l'eau (14) adaptée et configurée pour être intégrée dans la pièce creuse (11).

13. Mandrin d'enroulement (12, 13, 14, 23) selon l'une quelconque des revendications 10 à 12, dans lequel :
- le mandrin d'enroulement (12, 13, 14, 23) comprend au moins une première partie insoluble dans l'eau (12) et au moins une seconde partie insoluble dans l'eau (14) ;
- l'au moins une partie hydrosoluble (13, 23) agit comme élément de fixation entre la première partie insoluble dans l'eau (12) et la seconde partie insoluble dans l'eau (14).

14. Mandrin d'enroulement (12, 13, 14, 23) selon l'une quelconque des revendications 10 à 12, dans lequel ladite partie hydrosoluble (13, 23) est constituée d'une résine acrylique, de préférence additivée avec un pourcentage en poids compris entre 3 % et 10 % de dioxyde de titane ou de phosphate de triphényle.
